(19) Europäisches Patentamt
European Patent Office
Office européen des brevets

(11) Veröffentlichungsnummer: **0 068 243**
**B1**

# (12) EUROPÄISCHE PATENTSCHRIFT

(45) Veröffentlichungstag der Patentschrift: **07.05.86**

(51) Int. Cl.⁴: **C 08 G 59/14**, C 09 D 5/44

(21) Anmeldenummer: **82105142.2**

(22) Anmeldetag: **12.06.82**

## (54) Verfahren zur Herstellung stickstoffbasische Gruppen tragender Polyadditions/Polykondensationsprodukte und ihre Verwendung.

(30) Priorität: **19.06.81 DE 3123968**

(43) Veröffentlichungstag der Anmeldung: **05.01.83 Patentblatt 83/01**

(45) Bekanntmachung des Hinweises auf die Patenterteilung: **07.05.86 Patentblatt 86/19**

(84) Benannte Vertragsstaaten: **AT BE DE FR GB IT NL SE**

(56) Entgegenhaltungen:
**EP-A- 0 041 619**
**EP-A- 0 043 935**
**DE-A- 2 934 467**
**DE-B- 2 320 301**

(73) Patentinhaber: **BASF Aktiengesellschaft**
**Carl-Bosch-Strasse 38**
**D-6700 Ludwigshafen (DE)**

(72) Erfinder: **Kempter, Fritz Erdmann, Dr.**
**L 2, 14**
**D-6800 Mannheim (DE)**
Erfinder: **Schupp, Eberhard, Dr.**
**Tilsiter Weg 4**
**D-6830 Schwetzingen (DE)**

**EP 0 068 243 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft ein Verfahren zur Herstellung von durch Protonierung mit Säure wasserverdünnbaren, stickstoffbasische Gruppen tragenden Polyadditions/Polykondensationsprodukten aus Mannichbasen und Epoxidharz sowie deren Verwendung für die kathodische Elektrotachlackierung.

Aus den DE-PS 23 57 075, DE-AS 24 19 179 und DE-OS 27 55 906 sind bereits Lackbindemittel bekannt, die durch Polyaddition von Mannichbase an Epoxidharze erhalten worden sind, wobei als Mannichbasen Kondensationsprodukte aus kondensiertem Phenol mit mindestens zwei phenolischen Hydroxylgruppen pro Molekül einem sekundären Amin mit Hydroxylalkylgruppe und Formaldehyd verwendet werden.

Die dort beschriebenen Bindemittel werden aus Lackbädern, die einen hohen pH-Wert (über 7,0) aufweisen, kataphoretisch auf Metallteile aufgetragen, und ergeben ausgezeichnete Beschichtungen, besitzen jedoch hinsichtlich der Lager- und Badstabilität gewisse Schwächen.

In der EP-A-41619 wird ein Verfahren zur Herstellung von Polyadditionsprodukten beschrieben, die die Gruppierung

$$-CH_2-NH-\overset{\overset{O}{\parallel}}{C}-CR^1=CHR^2$$

enthalten. Hierbei treten weder als Zwischen- noch als Endprodukt phenolische Mannichbasen auf.

Die in der EP-A-43935 beschriebenen Polyadditions/Polykondensationsprodukte müssen als Komponente (A) (b) Hydroxyalkylgruppen enthaltende sekundäre Amine eingebaut, sowie Gruppierungen mit Polydienylresten enthalten.

Aufgabe der vorliegenden Erfindung ist es, stickstoffbasische Polyadditions/Polykondensationsprodukte aufzuzeigen, die die obengenannten Nachteile nicht oder in nur deutlich verringertem Ausmaß aufweisen.

Dieses Ziel läßt sich überraschenderweise dadurch erreichen, daß zum Aufbau der Komponente (A) ein Dialkylamin der Formel

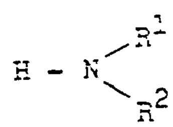

(b)

worin $R^1$ und $R^2$ untereinander gleich oder verschieden sind und für einen Alkyl- oder Alkoxyalkylrest mit 1 bis 9 Kohlenstoffatomen oder miteinander zu einem 5- oder 6-gliedrigen Ring verknüpft sind, stehen, und als Komponente (A) zumindest teilweise ein- oder mehrkernige Mono- und/oder Polyphenole verwendet werden, die Gruppierungen der allgemeinen Formel (I)

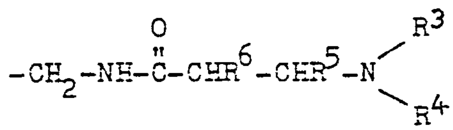

(I)

sowie gegebenenfalls der Formel (II)

$$-CH_2-NH-\overset{\overset{O}{\parallel}}{C}-CR^6=CHR^5 \qquad (II)$$

tragen

Gegenstand der vorliegenden Erfindung ist ein Verfahren zur Herstellung von durch Protonierung mit Säure wasserverdünnbaren, stickstoffbasische Gruppen tragenden Polyadditions/Polykondensationsprodukten, das dadurch gekennzeichnet ist, daß sie hergestellt werden durch Polyaddition von

(A) 5 bis 90 Gew.-% Mannichbase aus

(a) Mono- und/oder Polyphenolen

(b) mindestens einem Dialkylamin der Formel

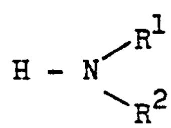

(b)

worin $R^1$ und $R^2$ untereinander gleich oder verschieden sind und für einen Alkyl- oder Alkoxyalkylrest mit 1 bis 9 Kohlenstoffatomen stehen oder miteinander zu einem 5- oder 6-gliedrigen Ring verknüpft sind und

c) Formaldehyd oder einer Formaldehyd liefernden Verbindung mit

(B) 10 bis 95 Gew.-% mindestens eines Epoxidharzes, wobei die Polyadditions/Polykondensationsprodukte aus (A) und (B) an aromatische Ringe gebundene Gruppen der allgemeinen Formel (I)

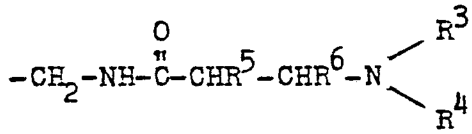
(I)

sowie gegenenenfalls Gruppen der allgemeinen Formel (II)

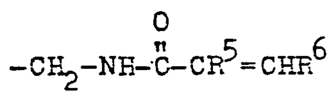
(II)

tragen, worin $R^3$ und $R^4$ untereinander gleich oder verschieden sind und für einen Alkylrest mit 1 bis 9 Kohlenstoffatomen, eine Hydroxyalkyl- oder Alkoxyalkylgruppe mit 2 bis 10 Kohlenstoffatomen stehen oder miteinander zu einem 5- oder 6-gliedriegen Ring verknüpft sind sowie $R^5$ und $R^6$ untereinander gleich oder verschieden sind und für Wasserstoff oder eine Methylgruppe stehen.

Bevorzugt werden zur Herstellung der Mannichbasen (A) Mono- und/oder Polyphenole (a) bestehend aus

($a_1$) mindestens einem ein- oder mehrkernigen Mono- und/oder Polyphenol, das zumindest teilweise durch

($a_2$) ein ein- oder mehrkernigen Mono- und/oder Polyphenol ersetzt ist, das Gruppen der allgemeinen Formel (I)

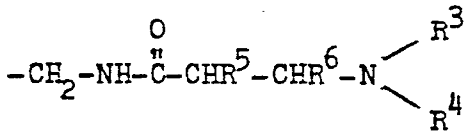
(I)

sowie gegebenenfalls Gruppen der allgemeinen Formel (II)

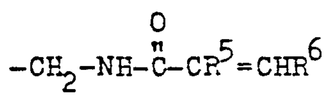
(II)

wobei $R^3$ bis $R^6$ die oben angegebene Bedeutung haben und welches durch die Tscherniak-Einhorn-Reaktion von Acrylamiden erhalten worden ist, verwendet.

Bevorzugt ist außerdem die Verwendung von Di-n-butylamin (b) oder eines Gemisches aus Di-n-butylamin und einem anderen sekundären Amin als Komponente (b) sowie von Umsetzungsprodukten ein- oder mehrkerniger Mono- und/oder Polyphenole mit N-Methylol-(meth)acrylamid, wobei an die C-C-Doppelbindungen des (Meth)acrylamids Diethanolamin als sekundäres Amin addiert wird.

Gegenstand der vorliegenden Erfindung ist außerdem die Verwendung dieser Polyadditions/Polykondensationsprodukte für die kathodische Elektrotauchlackierung metallischer Gegenstände.

Die erfindungsgemäßen Polyadditions/Polykondensationsprodukte sind gegenüber den in den obengenannten DE-PS, AS, OS sowie in der DE-OS 27 55 906 und in der EP-A-0043935 beschriebenen Lackbindemitteln besonders vorteilhaft, weil zum Aufbau der zur Vernetzung notwendigen Mannichgruppierung

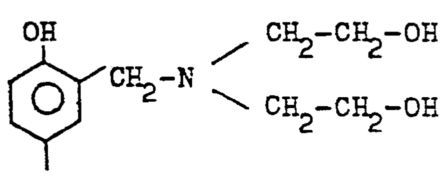

das üblicherweise notwendige Di-hydroxylalkylamin bzw. Alkylhydroxyalkylkamin wie z. B. Diethanolamin

nicht benötigt wird. Überraschenderweise wurde gefunden, daß zur Sicherstellung einer ausreichenden Vernetzung nur der Einbau von Gruppen der allgemeinen Formel I

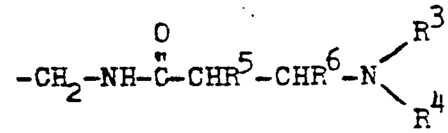

(I)

notwendig ist. Dies ist besonders bemerkenswert, da es sich bei den Reaktionsprodukten aus den Komponenten (A) und (B) um Polyadditions/Polykondensationsprodukte handelt, die phenolische Endgruppen aufweisen,

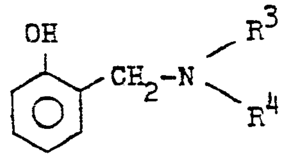

welche die Vernetzung der aus Gruppen der allgemeinen Formel (I) beim Einbrennen rückgespaltenen Gruppen der allgemeinen Formel (II) inhibieren sollten.

Hinsichtlich der Einführung der Gruppen der allgemeinen Formel (I) ist festzustellen, daß an die C-C-Doppelbindungen der Gruppierung (II) zweckmäßigerweise

$$-CH_2-NH-\overset{O}{\overset{\|}{C}}-CR^5=CHR^6 \qquad \text{(II)}$$

vor der Mannichreaktion sekundäre Amine addiert werden (Michael-Addition), wobei diese C-C-Doppelbindung zumindest teilweise, bevorzugt aber vollständig umgesetzt werden, wenn diese nur in geringerem Umfange vorhanden sind und zur Erzielung einer hinreichenden Wasserlöslichkeit herangezogen werden sollen.

Es ist z. B. möglich, der Tscherniac-Einhornreaktion von Acryl- bzw. Methacrylamid zunächst eine teilsweise Umsetzung der Doppelbindungen durch Michael-Addition folgen zu lassen und dann die Phenolgruppen des resultierenden Reaktionsproduktes mit einem Überschuß an Polyepoxid umzusetzen und schließlich die noch vorhandenen Epoxidgruppen dieses Umsetzungsproduktes mit der Mannichbase ($a_1$) zur Reaktion zu bringen.

Auf dem vorstehend beschriebenen Weg ist beispielsweise die Herstellung der Gruppierungen der allgemeinen Formel (II)

$$-CH_2-NH-\overset{O}{\overset{\|}{C}}-CR^5=CHR^6 \qquad \text{(II)}$$

aufweisenden Reaktionsprodukte aus (A) und (B) möglich.

Zu den Aufbaukomponenten der erfindungsgemäßen Polyadditions/Polykondensationsprodukte ist im einzelnen folgendes auszuführen.

(A) Herstellung der Mannichbase

(a) Als ein- oder mehrkernige Mono- oder Polyphenole ($a_1$) kommen in Betracht : phenol, seine Mono- bzw. Dialkylderivate mit 1 bis 18 Kohlenstoffatomen in den Alkylgruppen, z. B. o- und p-Kresol, p-tert.-Butylphenol, Naphthole, wie α- und β-Naphthol, Cardanol® sowie insbesondere mehrwertige Phenole, die einen oder mehrere aromatische Reste enthalten, vorzugsweise Bisphenol A oder Novolake, Phenolgruppen enthaltende Indanderivate gemäß der US-PS 2 989 534, wie

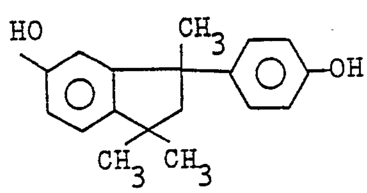

sowie ganz allgemein Phenolgruppen enthaltende Cumaron- und Indenharze, Phenolgruppen enthaltende Butadien- und Isopren-homo- oder Copolymerisate, z. B. nach DE-OS 27 55 906 und Produkte

mit Polybutadienimidgruppierungen gemäß der deutschen Patentanmeldung P 32 26 873.6 sowie Ethergruppen enthaltende Polyphenole nach DE-AS 24 19 179.

Besonders geeignet als Komponente (a) sind Phenole der allgemeinen Formel

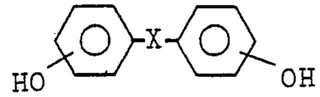

wobei die OH-Gruppen in ortho- und/oder para-Stellung zu X stehen und X für einen geradkettigen oder verzweigten zweiwertigen aliphatischen Rest mit 1 bis 3 Kohlenstoffatomen oder für

$>SO_2$, $>SO$, $-S-$, $>C=O$

und —O— steht ; vorzugsweise geeignet ist Bisphenol A. Weiterhin geeignet sind die Alkylderivate dieser mehrkernigen Phenole.

Zur Herstellung der erfindungsgemäßen Lackbindemittel eignet sich als Komponente (A) auch ein Mannichkondensationsprodukt aus mindestens einem Phenol und/oder Alkylphenol, primärem Amin und Formaldehyd oder einer Formaldehyd liefernden Verbindung, wie in der DE-OS 27 11 385 beschrieben.

Geeignete Phenole zur Herstellung dieser Mannichkondensationsprodukte sind Phenol oder Alkylphenole, vorzugsweise Monoalkylphenole mit 1 bis 18, insbesondere 3 bis 12 Kohlenstoffatomen im geradkettigen, verzweigten oder cyclischen Alkylrest, wie Hexyl-, Nonyl-, Dodecyl- und tert.-Butylphenyl. Nonylphenol (z. B. auch technisches Nonylphenol mit 85 % 4-Nonylphenol) und p-tert.-Butylphenol sowie Gemische dieser Alkylphenole mit Phenol sind bevorzugt. Auch 3-Alkylphenole, wie z. B. das aus Cashew-Nußschalenöl gewinnbare Cardanol®, welches im wesentlichen aus 3-(8,11)-Pentadecadienyl)-phenol bestehend beschrieben wird, sind geeignet. Ein Teil des unsubstituierten Phenols kann auch durch Bisphenol A ersetzt sein. Als primäre Amine kommen in Frage Monoalkylamine mit 2 bis 13, vorzugsweise 2 bis 6 Kohlenstoffatomen im geradkettigen, verzweigten oder cyclischen Alkylrest, wie Butyl-, Hexyl-, Octyl-Amin soxie hydroxyl- und alkoxylsubstituierte Monoalkylamine, wie Monoethylanolamin und Monoisopropanolamin, 2-Alkoxyethylamine, wie 2-Methoxyethylamin und 2-Ethoxyethylamin sowie Gemische dieser genannten Amine.

Zur Herstellung dieser als Komponente (a) verwendbaren Mannichkondensationsprodukte werden (Alkyl)-Phenol, primäres Amin und Formaldehyd oder Formaldehyd liefernde Verbindungen zweckmäßigerweisen in solchen Mengen miteinander umgesetzt, daß auf 2 Mole (Alkyl-)Phenol mindestens 1 Mol des primären Amins kommen, entsprechend einer Mindestmenge von 2 Molen Formaldehyd.

Die Komponente ($a_2$) ist ein ein- oder mehrkerniges Mono- und/oder Polyphenol, das Gruppen der allgemeinen Formel (I)

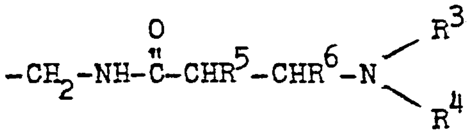 (I)

sowie gegebenenfalls Gruppen der allgemeinen Formel (II)

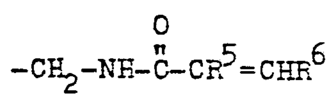 (II)

trägt, worin $R^3$ und $R^4$ untereinander gleich oder verschieden sind und für einen Alkylrest mit 1 bis 9 Kohlenstoffatomen, eine Hydroxyalkyl- oder Alkoxyalkylgruppen mit 2 bis 10 Kohlenstoffatomen (bevorzugt aber für einen Hydroxyethylrest) stehen oder miteinander zu einem 5- oder 6-gliedrigen Ring verknüpft sind sowie $R^5$ und $R^6$ untereinander gleich oder verschieden sind und für Wasserstoff oder eine Methylgruppe stehen. Gruppen der allgemeinen Formel (I) werden im allgemeinen durch die säurekatalysierte Tscherniac-Einhorn-Reaktion von Phenolen mit N-Methylolamiden der Acryl- bzw. Methacrylsäure eingeführt, die im allgemeinen bei Temperaturen von 30 bis 150 °C, vorzugsweise 50 bis 120 °C durchgeführt wird.

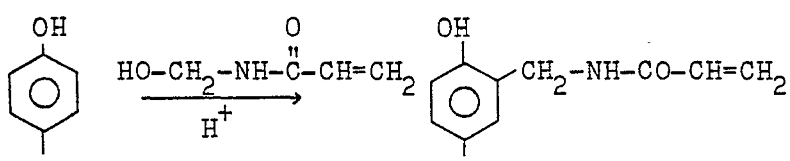

Tscherniac-Einhorn-Reaktion

Für die im Anschluß daran stattfindende Michael-Addition ist ein Temperaturbereich von 70 bis 120 °C, bevorzugt 80 bis 100 °C anzuwenden.

Über den Aminteil der Gruppen der allgemeinen Formel (I) gilt das über die Komponente (b) ausgeführte. Bevorzugt eingesetzt werden jedoch sekundäre Alkanolamine, wie Alkylalkanolamine, Diisopropanolamin usw. sowie Hydroxyalkylpiperazine wie Hydroxyethylpiperazin, insbesondere aber Diethanolamin.

Besonders bevorzugt sind Amine mit einer sekundären und einer tertiären Aminogruppe, beispielsweise ausgewählt aus der Klasse der Piperazine wie N-Hydroxylethylpiperazin oder z. B. N,N,N'-Trimethylalkylendiamine. Ihr Vorteil ist neben ihrer geringen Flüchtigkeit, daß zwei Aminogruppen pro Reaktionsschritt eingebaut werden und das z. B., verglichen mit dem ebenfalls wenig flüchtigen Diethanolamin, die eingebauten N-Atome wesentlich basischer sind und so neben einem höheren pH-Wert der Bäder eine verbesserte katalytische Wirkung auf die Reaktion der Komponente (A) mit der Komponente (B) gewährleistet wird, oder eine Verminderung der Reaktionstemperatur beziehungsweise eine spezifischere Reaktionsführung im Sinne der Reaktion der phenolischen Gruppen mit den Epoxidgruppen sichergestellte wird. Das gilt auch bei Anwesenheit von quartären Aminogruppen im Reaktionsgemisch.

Durch die Kombination der Gruppierung (I) mit der Dialkylaminomethylphenolgruppierung werden andere als die für Mannichbasen, nach den anfangs genannten DE-OS, AS und PS übliche Vernetzungsmöglichkeiten geschaffen. Was zu einem besonders vorteilhaften Verlaufs- und Härtungs-Verhalten der Beschichtungen führt.

b) Als sekundäre Amine (b) werden Dialkylamine der Formel

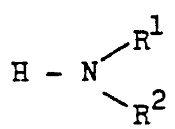

verwendet, worin $R^1$ und $R^2$ untereinander gleich oder verschieden sind und für einen Alkyl- oder Alkoxyalkylrest mit 1 bis 9 Kohlenstoffatomen, vorzugsweise für geradkettige oder verzweigte Alkylreste mit 3 bis Kohlenstoffatomen oder eine Alkoxyalkylgruppe mit 2 bis 10 Kohlenstoffatomen stehen, oder miteinander zu einem 5- oder 6-gliedriegen Ring verknüpft sind. Derartige besonders geeignete sekundäre Amine sind beispielsweise Di-n-butyamin, Di-n-propylamin, Diisopropylamin, Di-n-pentylamin, Di-n-hexylamin, Di-n-octylamin, Di-2-ethylhexylamin und Di-2-alkoxyethylamin, wie z. B. Di-2-methoxy-, Di-2-ethoxy- oder Di-2-butoxyethylamin.

Die Wirkungsweise dieser sekundären Amine besteht vornehmlich in der Beeinflussung der Stabilitätseigenschaften der Bindemittel, außerdem tragen sie zum Verlauf und zur « inneren Weichmachung » der aus den Bindemitteln hergestellten Lackschichten bei.

c) Als Formaldehyd bzw. Formaldehyd liefernde Verbindungen werden vorzugsweise alkoholische, wie z. B. butanolische Formaldehydlösungen oder Paraformaldehyd oder deren Gemische verwendet.

Die Herstellung der Mannichbasen (A) erfolgt nach den üblichen in der Literatur angegebenen Methoden, wie z. B. Houben-Weyl, Methoden der organischen Chemie, Band XI/1, Seite 731, 1957, zu entnehmen ist. Die Wahl der Lösungsmittel wird den geänderten Polaritätsverhältnissen angepaßt. Es kann zweckmäßig sein, höhere Alkohole, Cycloaliphaten oder Alkylaromaten neben polaren Lösungsmitteln mitzuverwenden.

Die Mengenverhältnisse der eingesetzten Ausgangsstoffe ergeben sich aus den jeweils angestrebten Eigenschaften, wobei das Gewichtsverhältnis der Komponente ($a_1$) zur Komponente ($a_2$) 1 : 0,1 bis 1 : 15, bevorzugt 1 : 0,5 bis 1 : 10, betragen kann.

Die Mengenverhältnisse der Ausgangsstoffe ($a_1$), ($a_2$) und (b) werden zur Herstellung der Komponente (A) zweckmäßigerweise so gewählt, daß auf jede phenolische Hydroxylgruppe des Gemisches der Komponenten ($a_1$) und ($a_2$) etwa 0,1 bis 2,0 vorzugsweise 0,3 bis 1,5 Mole der Komponente (b) kommen.

Die zur Herstellung der Mannichbase (A) einzusetzende Menge an (c) beträgt mindestens 1 Mol bezogen auf 1 Mol (b).

Eine besonders bevorzugte Ausführungsform der vorliegenden Erfindung besteht darin, daß die Herstellung der Mannichbasen mit einer formaldehydliefernden Verbindung, z. B. Paraformaldehyd, in Mengen, die dem verwendeten Aminanteil praktisch äquivalent sind, im allgemeinen jedoch einen 25 %igen Überschuß nicht Überschreiten, in einem Alkohol, wie Isopropanol oder Isobutanol, durchgeführt wird und daß die Komponente (A) direkt, d. h. ohne nachfolgende Umsetzung mit weiterem Formaldehyd mit der Komponente (B) zur Reaktion gebracht wird.

Im allgemeinen wird die Umsetzung der Komponente (A) mit der Komponente (B) so gesteuert, daß die entstehenden erfindungsgemäßen Polyadditions/Polykondensationsprodukte mittlere Molekulargewichte von 800 bis 5 000, vorzugsweise 1 000 bis 3 000 aufweisen und daß mindestens ein Teil der Endgruppen der Hauptkette als phenolische Endgruppen, also Dialkylaminomethylphenolgruppen vorliegen.

Die Umsetzung der Komponente (A) mit der Komponente (B) erfolgt im allgemeinen bei Temperaturen von 20 bis 100° C, vorzugsweise 60 bis 90° C, bevorzugt 70 bis 80° C in organischen Lösungsmitteln, wie z. B. Alkoholen mit 3 bis 15 Kohlenstoffatomen in der Alkylgruppe und Glykolether sowie Alkylaromaten wie Toluol usw. und Cycloaliphaten.

Die Mannichkondensationsprodukte (A) werden zur Herstellung der erfindungsgemäßen Elektrotauchlackbindemittel in einer Menge von 5 bis 90 Gew.-%, vorzugsweise 15 bis 60 Gew.-%, mit 10 bis 95 Gew.-%, vorzugsweise 30 bis 85 Gew.-% Epoxidharz (B) umgesetzt, dabei kann die Komponente $a_2$ bei der Herstellung der Komponente (A) anwesend sein, oder erst nach der Herstellung der Komponente ($a_1$) zugesetzt werden. Durch den Grad der Veretherung der phenolischen Komponenten ($a_1$) und ($a_2$) mit dem Epoxidharz (B) können insbesondere die Stabilitäts-, aber auch andere wesentliche Eigenschaften, wie z. B. die Spannungsfestigkeiten, beeinflußt werden.

Wird die Umsetzung in Gegenwart von geringen Mengen quaternierbaren tertiären Aminen, namentlich solchen, die mindestens eine Methylgruppe enthalten, durchgeführt, so entstehen Produkte, die quartäre Ammoniumgruppen enthalten, was zur Erhöhung des pH-Wertes der hergestellten Elektrotauchbäder erwünscht sein kann.

(B) Als Epoxidharze (B) kommen die üblichen Polyepoxidverbindungen in Frage, vorzugsweise Polyepoxid-Verbindungen mit 2 bis 3 Epoxidgruppen im Molekül, wie z. B. Umsetzungsprodukte von mehrwertigen Phenolen, besonders solchen der unter ($a_1$) erwähnten Formel

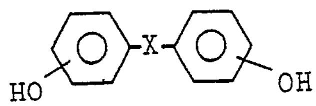

mit Epichlorhydrin, aber auch die oben erwähnten Reaktionsprodukte von mehrwertigen Alkoholen, wie z. B. Pentaerythrit, Trimethylpropan oder Glycerin mit Epichlorhydrin. Geeignet sind alle gegebenenfalls Ethergruppen enthaltenden Di- oder Polyole, die nach der Einführung des Glycidylrestes noch freie OH-Gruppen besitzen, doer völlig frei von alkoholischen OH-Gruppen sind. Weiterhin eignen sich epoxidgruppenhaltige Umsetzungsprodukte von Epoxidharzen mit primären oder sekundären Aminen oder hydroxylgruppenhaltigen Glykolethern ; ferner Epoxidharze, die Heteroatome, wie Schwefel, eingebaut enthalten. Geeignet sind auch geblockte Urethangruppen-enthaltende Epoxidharze, wie sie in der DE-OS 25 54 080 und 25 41 801 beschrieben sind. Ganz allgemein sind alle Harzkörper geeignet, die 1,2-Epoxidgruppen enthalten und sich aus der Klasse der Polyacrylat-, Polyether, Polyester- und Polyurethan-Harze sowie von Polybutadien- und anderen Ölen herleiten, sowie Produkte, die epoxidierte Cyclohexenreste enthalten.

Andere geeignete Verbindungen aus Harzen mit Epoxidgruppen sind stickstoffhaltige Diepoxide, wie sie beschrieben sind in der US-PS 3 365 471, Epoxyharze von 1,1-Methylen-bis-(5)substituiertem Hydantoin) (US-PS 3 391 097), Diepoxide mit Bisimiden (US-PS 3 450 711), epoxydierte Aminomethyldiphenyloxide (US-PS 3 312 664), aliphatische und heterocyclische N,N'-Diglycidylverbindungen (z. B. nach US-PS 3 503 979), Aminoepoxyphosphonate (GB-PS 1 172 916), 1,3,5-Triglycidylisocyanurate und ander in der Technik bekannte Materialien, die Epoxidgruppen enthalten.

Um die zur Harzbildung aus den Komonenten (A) und (B) bevorzugte höhere Funktionalität der Komponente (B) sicherzustellen, kann (B) gegebenenfalls mit Diisocyanaten, wie Hexamethylendiisocyanat, Toluylendiisocyanat oder Polyisocyanat umgesetzt werden. Beispielsweise können Epoxidverbindungen die eine Epoxidgruppe besitzen, aber noch andere funktionnelle Gruppen, z. B. OH-Gruppen tragen, mit Diisocyanaten umgesetzt werden. Gegebenenfalls können die Epoxidharze mit partiell blockierten Di- und Polyisocyanaten weiter umgesetzt werden.

Das erfindungsgemäße, aus den Komponenten (A) und (B) erhaltene Polyadditions/Polykondensationsprodukt wird bevorzugt aus einem Phenol-Epoxid-Gruppenverhältnis von 1 : 0,1-1 : 0,9, insbesondere 1 : 0,3-1 : 0,7 erhalten, ist im wesentlichen epoxidgruppenfrei und sollte zum Zeitpunkt der Verarbeitung nicht mehr als 0,25 Epoxidgruppen pro Molekül Umsetzungsprodukt enthalten. Gegebenenfalls können die nach der Herstellung der Bindemittel d. h. beispielsweise bei Erreichen einer bestimmten Viskosität noch vorhandenen Epoxidgruppen durch Zugabe von Mercaptanen Säuren oder Aminen entfernt werden.

Das erfindungsgemäße Polyadditions/Polykondensationsprodukt (Festharz) enthält im allgemeinen 0,5 bis 25, vorzugsweise 2,5 bis 15 Gew.-% der Gruppierung (I), wovon gegebenenfalls jeweils bis zu 60 % als Gruppierung (II) (bezogen auf (Meth)-Acrylamid) vorliegenkönnen.

Zusätze zu den erfindungsgemäßen Polyadditions/Polykondensationsprodukten können Polybutadienöle oder ander Kohlenwasserstofföle sowie blockierte Urethangruppen aufweisende Verbindungen sein, wie sie z. B. in DE-OS 27 11 425 und DE-OS 27 55 907 beschrieben worden sind. Außerdem sind Bindemittel nach DE-OS 26 06 831 geeignet.

Die erfindungsgemäßen Polyadditions/Polykondensationsprodukte können mit üblichen Lacklösungsmitteln, wie Alkoholen von einer Kettenlänge von $C_4$ bis $C_{16}$, z. B. Isopropanol, Dekanol, n- und iso-Butanol, Alkylaromaten, z. B. Toluol und Cycloaliphaten oder mit wäßrigen organischen Lösungsmitteln (Gemischen) verdünnt, gegebenenfalls mit Pigmenten, Füllstoffen und üblichen Hilfsmitteln unter

Anwendung konventioneller Lackiermethoden, wie Spritzen, Tauchen, Fluten, auf das zu überziehende bzw. zu lackierende Substrat, wie z. B. auf Holz, Metall, Glas oder Keramik aufgetragen, getrocknet und bei Temperaturen von über 170° C gehärtet werden. Die damit erhaltenen Überzüge zeichnen sich beispielsweise durch hohe Härte und Lösungsmittelbeständigkeit aus.

Bevorzugt werden die erfindungsgemäßen Lackbindemittel jedoch mit Säuren, wie z. B. Phosporsäure und ihre Derivate, vorzugsweise mit wasserlöslichen Carbonsäuren, wie z. B. Essigsäure, Ameisensäure oder Milchsäure, protoniert angewandt. Das protonierte Lackbindemittel ist wasserverdünnbar und kann unter Anwendung der oben angeführten konventionellen Lackiermethoden verarbeitet werden, wobei ebenfalls Überzüge mit sehr wertvollen Eigenschaften erhalten werden. Der Protonierungsgrad soll jedoch so gering wie möglich gehalten werden.

Die bevorzugte Verwendung der protonierten erfindungsgemäßen Lackbindemittel ist die kathodische Elektrotauchlackierung elektrisch leitender Flächen, z. B. von Metallteilen, Blechen usw. aus Messing, Kupfer, Aluminium, Eisen und Stahl, die gegebenenfalls chemisch vorbehandelt, z. B. phosphatiert sind.

Die wäßrigen Lösungen oder Dispersionen der zumindest teilweise als Salz einer wasserlöslichen Carbonsäure vorliegenden erfindungsgemäßen Lackbindemittel können auch im Gemisch mit diesen duch Kataphorese elektrochemisch abscheidbare Hilfsstoffe enthalten, wie lösliche Farbstoffe, Lösungsmittel, Verlaufsverbesserer, Stabilisatoren, Härtungskatalysatoren, besonders die Härtung beschleunigende metallhaltige Mangan- bzw. Kobaltnaphthenate oder -octoate, außerdem Metallsalze, wie sie zum bekannten Stand der Technik gehören und z. B. in den DE-OS 25 41 234 und DE-OS 24 57 457 genannt sind, insbesonders aber das zur Komplexbildung mit dem erfindungsgemäßen Bindemittel befähigte $Cu^{++}$-Jon ; Antischaummittel sowie andere Hilfs und Zusatzstoffe.

Die erfindungsgemäßen Lackbindemittel können sowohl als Hauptträgerharz für die Elektrische Abscheidung als auch als Trägerharzs in der Pigmentpaste benutzt werden. Alternativ kann das Harz als Hauptträgerharz für die elektrisch abzuscheidende Masse in Kombination mit einer üblichen Pigmentpaste verwendet werden. Außerdem kann das Harz als Trägerharz in einer Pigmentpaste in Kombination mit einem bekannten polyamingruppenhaltigen Trägerharz für die kathodisch elektrische Abscheidung verwendet werden. Die amingruppenhaltigen, kationisch abscheidbaren Harze sind bekannt und müssen deshalb nicht im einzelnen beschrieben werden. Beispiele von geeigneten Harzen schließen tertiäre aminsalzhaltige Harze ein, wie sie in der DE-OS 26 03 666 offenbart sind, und quarternäre ammoniumsalzgruppenhaltige Harze, wie sie in der US-PS 3 839 252 beschrieben sind.

Zur kathodischen Elektrotauchlackierung wird im allgemeinen durch Verdünnen mit entionisiertem Wasser ein Feststoffgehalt des Elektrotauchbades von 5 bis 20 Gew.-% eingestellt. Die Abscheidung erfolgt im allgemeinen bei Temperaturen von 15 bis 40° C während einer Zeit von 1 bis 2 Minuten bei BadpH-Werten von 5,0 bis 8,5, vorzugsweise pH 6,0 bis 7,5 bie Abscheidungsspannungen zwischen 50 und 500 Volt. Nach dem Abspülen des auf dem elektrisch leitenden Körper kathodisch abgeschiedenen Films wird das selbstvernetzende Bindemittel bei etwa 150 bis 220° C bis 30 Minuten, vorzugsweise bei 160 bis 200° C 20 Minuten gehärtet.

Die erfindungsgemäßen Polyadditions/Polykondensationsprodukte ergeben bei der kathodischen Abscheidung Überzüge mit hervorragenden Eigenschaften, wie große Härte und Kratzfestigkeit, bei Elastizität und fester Haftung auf dem Substrat. Außerdem fallen die guten Umgriffseigenschaften der Bindemittel auf.

Weiterhin zeichnen sich die damit erhaltenen Überzüge durch hohe Lösungsmittelbeständigkeit und Beständigkeit im Salzsprühtest aus.

Die in den Beispielen genannten Teile und Prozente sind Gewichsteile bzw. Gewichtsprozente.

## Beispiele

a) Herstellung eines Ethergruppen enthaltenden Polyphenols

Entsprechend Beispiel 1 der DE-PS 24 19 179 werden 420 Teile eines Triglycidylethers aus Pentaerythrit und Epichlorhydrin mit einem Epoxidwert von 0,62 und 73,2 Teile Phenol bei 180° C 30 Minuten zur Reaktion gebracht. Danach werden 364,6 Teile Bisphenol A zugesetzt. Die Temperatur des Ansatzes fällt dabei auf ca. 120° C. Innerhalb 30 Minuten wird wieder auf 180° C aufgeheizt und 1 Stunde bei dieser Temperatur gehalten. Der auf 130° C abgekühlte Ansatz wird mit 420 Teilen Toluol verdünnt. Der Feststoffgehalt beträgt 67,8 %.

b) Herstellung eines Polybutadienmaleinimides

2 100 Teile eines Polybutadienöles (z. B. Lithene PM4 der Fa. Metallgesellschaft AG) 300 Teile Maleinsäureanhydrid, 24 Teile Methylisobutylketon und 2,4 Teile phosphorige Säure werden 4 Stunden bei 190° C zur Reaktion gebracht. Danach werden bei 135 bis 140° C 78 Teile Ammoniak eingegast. Dann wird bei 190° C weitere 3 Stunden gerührt und währenddessen Wasser ausgekreist. Anschließend wird mit 612 Teilen Toluol verdünnt. Der Feststoffgehalt beträgt 76,4 %.

c) Herstellung eines Butadienmaleinimides

1 800 Teile des unter b) genannten Plybutadienöles, 200 Teile Maleinsäureanhydrid, 20 Teile Methylisobutylketon und 2 Teile phosphorige Säure werden 4 Stunden bei 190° C zur Reaktion gebracht. Danach werden bei 135 bis 140° C 52 Teile Ammoniak eingegast. Bei 190° C wird weitere 3 Stunden gerührt und währenddessen Wasser ausgekreist. Anschließend wird mit 510 Teilen Toluol verdünnt. Der Feststoffgehalt beträgt 77,4 %.

d) Tscherniac-Einhorn/Michael-Reaction

430 Teile des nach a) hergestellten Ethergruppen enthaltenden Polyphenols, 136,5 Teile Acrylamid, 79,7 Teile Paraformaldehyd, 91 Teile p-tert.-Butylphenol, 0,4 Teile Phenothiazin und 78 Teile Bisphenol A werden bei 115° C gelöst. Man kühlt dann auf 60° C und gibt 1 Teil Bortrifluoridethyletherat zu. Nach 30 Minuten Reaktion bei 60° C erfolgt die weitere Zugabe von 1 Teil Bortrifluoridethyletherat und nach weiteren 30 Minuten bei 60° C werden nochmals 0,7 Teile Bortrifluoridethyletherat zugegeben. Man rührt noch 3 Stunden bei 60° C und kreist anschließend bei 120° C das Wasser aus. Danach tropft man 202 Teile Diethanolamin zu und läßt noch 2 Stunden bei 90° C nachreagieren. Schließlich wird mit 29,4 Teilen Isobutanol, 29,4 Teilen Isopropanol, 110 Teilen Butylglykol und 110 Teilen Ethylglykol verdünnt. Der Feststoffgehalt beträgt 67,3 %.

e) Tscherniac-Einhorn/Michael-Reaktion

90 Teile des unter b) hergestellten Polybutadienmaleinimides, 300 Teile eines Phenolgruppen enthaltenden Indenharzes mit einem Gehalt an 6,1 % phenolischen OH-Gruppen (der Firma Rütgers AG), 118,3 Teile Acrylamid, 17,8 Teile Phenol, 69 Teile Paraformaldehyd, 0,2 Teile Phenothiazin und 75 Teile Toluol werden bei 115° C gelöst. Man kühlt dann auf 60° C ab und gibt 1 Teil Bortrifluoridethyletherat zugegeben. Man läßt dann 3 Studen bei 60° C nachreagieren. Anschließend wird bei 120° C das Wasser ausgekreist. Danach tropft man bei 90° C 160 Teile Diethanolamin zu und läßt noch 2 Stunden bei 90° C nachreagieren. Schließlich wird mit 126,5 Teilen Isopropanol und 126,5 Teilen Ethylglykol verdünnt. Der Feststoffgehalt beträgt 69 %.

f) Tscherniac-Einhorn/Michael-Reaktion

578,4 Teile des unter c) hergestellten Polybutadienmaleinimides, 170 Teile Acrylamid, 99,7 Teile Paraformaldehyd, 140 Teile p-tert.-Butylphenol, 100 Teile Bisphenol A, 0,5 Teile Phenothiazin und 6,6 Teile Toluol werden bei 115° C gelöst. Man kühlt dann auf 60° C und gibt 1,5 Teile Bortrifluoridethyletherat zu. Nach 30 Minuten Reaktion bei 60 °C erfolgt die weitere Zugabe von 1,5 Teilen Bortrifluoridethyletherat und nach weiteren 30 Minuten wird nochmals 1 Teil Bortrifluoridethyletherat zugegeben. Man läßt dann 3 Stunden bei 60° C nachreagieren und kreist anschließend bei 120° C das Wasser aus. Danach tropft man bei 90 °C 252,1 Teile Diethanolamin zu und läßt noch 2 Stunden bei 90 °C nachreagieren. Der Feststoffgehalt beträgt 86,3 %.

g) Tscherniac-Einhorn/Michael-Reaktion

Es werden 357,3 Teile eines Phenolgruppen enthaltenden Indenharzes mit einem Gehalt von 6,1 % phenolischen OH-Gruppen, 91 Teile Acrymalid, 53,1 Teile Paraformaldehyd, 0,2 Teile Phenothiazin und 62 Teile Toluol bei 115° C gelöst. Man kühlt dann auf 60° C ab und gibt 0,7 Teile Bortrifluoridethyletherat zu. Nach 30 Minuten Reaktion bei 60° C erfolgt die weitere Zugabe von 0,7 Teilen Bortrifluoridethyletherat und nach weiteren 30 Minuten werden nochmals 0,4 Teile Bortrifluoridethyletherat zugegeben. Dann rührt man noch 3 Stunden bei 60° C. Anschließend wird bei 120° C das Wasser ausgekreist. Danach tropft man bei 90° C 134,6 Teile Deithanolamin zu und läßt noch 2 Stunden bei 90° C nachreagieren. Schließlich wird mit 50 Teilen Isopropanol und 50 Teilen Isobutanol verdünnt. Der Feststoffgehalt beträgt 78,2 %.

h) Herstellung eines acrylische Doppelbindungen enthaltenden Tscherniac-Einhorn-Produktes

Es werden 752 Teile Phenol, 456 Teile Bisphenol A, 1 278 Teile Acrylamid, 623,7 Teile Paraformaldehyd und 0,2 Teile Cu-Pulver bei 120° C gelöst, auf 60° C gekühlt und 24 Teile Bortrifluoridethyletherat zugegeben. Anschließend reagiert der Ansatz 4 Stunden bei 60° C einschließlich der exothermen Reaktionsphase und 30 Minuten bei 100° C. Danach wird as Reaktionswasser im Vakuum weitgehend abdestilliert und der Ansatz mit 1 194 Teilen Isobutanol auf 70° C verdünnt.

Herstellung des Elektrotauchlackbindemittels

Beispiel A

252 Teile des unter d) hergestellten Tscherniac-Einhorn/Michael-Adduktes, 33,5 Teile Paraformaldehyd, 125 Teile Bisphenol A, 86,4 Teile Di-n-butylamin, 50 Teile Di-n-hexylamin und 29 Teile Isobutanol werden 15 Minuten bei 50° C und anschließend 2,5 Stunden bei 80° C gerührt. Dann erfolgt die Zugabe von 137,7 Teilen eines Diglycidylethers aus Bisphenol A und Epichlorhydrin mit einem Epoxidwert von 0,2, 54,7 Teilen eines Triglycidylethers aus Pentaerythrit und Epichlorhydrin mit einem Epoxidwert von 0,62 und 50 Teilen Isobutanol. Bei 70° C läßt man nachreagieren bis eine Viskosität von 740 mPa · s (gemessen bei 75° C mit dem ICI-Platte-Konus-Viskosimeter der Fa. Epprecht) erreicht ist und verdünnt dann mit 50 Teilen Isobutanol. Der Feststoffgehalt beträgt 74,2 %.

Beispiel B

328,4 Teile des unter d) hergestellten Tscherniac-Einhorn/Michael-Adduktes, 33,5 Teile Paraformaldehyd, 121,2 Teile Di-n-butylamin, 125 Teile Bisphenol A und 40 Teile Isobutanol werden 15 Minuten bei 50° C und anschließend 2,5 Stunden bei 80° C gerührt. Dann erfolgt die Zugabe von 200 Teilen eines Diglycidylethers aus Bisphenol A und Epichlorhydrin mit einem Epoxidwert von 0,2, 54,7 Teilen eines Triglycidylethers aus Pentaerythrit und Epichlorhyrin mit einem Epoxidwert von 0,62 und 35 Teilen Isobutanol. Bei 70° C läßt man dann nachreagieren, bis eine Viskosität von 840 mPa · s (gemessen bei 75° C mit dem ICI-Platte-Konus-Viskosimeter) erreicht ist. Die Reaktion wird dann mit 7 Teilen Mercatoethanol in 50 Teilen Isobutanol abgebrochen. Der Feststoffgehalt beträgt 72,1 %.

Beispiel C

Es werden 291,3 Teile des unter e) hergestellten Tscherniac-Einhorn/Michael-Adduktes, 33,5 Teile Paraformaldehyd, 125 Teile Bisphenol A, 86,4 Teile Di-n-butylamin, 50 Teile Di-n-hexylamin und 32 Teile Isobutanol 15 Minuten bei 50 °C und anschließend 2,5 Stunden bei 80° C gerührt. Dann erfolgt die Zugabe von 137,3 Teilen eines Diglycidylethers aus Bisphenol A und Epichlorhydrin mit einem Epoxidwert von 0,2, 57 Teilen eines Triglycidylethers aus Pentaerythrit und Epichlorhydrin mit einem Epoxidwert von 0,62 und 50 Teilen Isobutanol. Bei 70° C läßt man dann nachreagieren bis eine Viskosität von 490 mPa · s (gemessen bei 75° C mit dem ICI-Platte-Konus-Viskosimeter) erreicht ist und verdünnt dann mit 50 Teilen Isobutanol. Der Feststoffgehalt beträgt 76,4 %.

Beispiel D

303, 4 Teile des unter e) hergestellten Tscherniac-Einhorn/Michael-Adduktes, 82,5 Teile Bisphenol A, 26,7 Teile Paraformaldehyd, 95,6 Teile Di-n-butylamin, 34 Teile Isopropanol und 35 Teile Isodekanol werden 15 Minuten bei 50° C und anschließend 2,5 Stunden bei 80° C gerührt. Dann erfolgt die Zugabe von 142 Teilen eines Diglycidylethers aus Bisphenol A und Epichlorhydrin mit einem Epoxidwert von 0,1 und 47 Teilen Toluol. Nach weiteren 30 Minuten bei 75 bis 80° C werden 103 Teile eines Diglycidylethers aus Bisphenol A und Epichlorhydrin mit einem Epoxidwert von 0,2, 56 Teile eines Triglycidylethers aus Pentaerythrit und Epichlorhydrin mit einem Epoxidwert von 0,62 und 50 Teile Ethylglykol zugegeben. Bei 70 bis 75° C läßt man dann nachreagieren bis eine Viskosität von 460 mPa · s (gemessen bei 75° C mit dem ICI-Platte-Konus-Viskosimeter) erreicht ist. Die Reaktion wird schließlich durch Zugabe von 7 Teilen Merkaptoethanol abgebrochen. Der Feststoffgehalt beträgt 69,2 %.

Beispiel E

351 Teile des unter e) hergestellten Tscherniac-Einhorn/Michael-Adduktes, 80 Teile Bisphenol A, 89,7 Teile Di-n-butylamin, 25 Teile Paraformaldehyd, 25 Teile Isodekanol und 33 Teile Isopropanol werden 15 Minuten bei 50° C und anschließend bei 80° C gerührt. Dann erfolgt die Zugabe von 131 Teilen eines Diglycidylethers aus Bisphenol A und Epichlorhydrin mit einem Epoxidwert von 0,1 und 70 Teilen Toluol. Nach weiteren 30 Minuten bei 75 bis 80° C werden 95 Teile eines Diglycidylethers aus Bisphenol A und Epichlorhydrin mit einem Epoxidwert von 0,2, 55,2 Teile eines Triglycidylethers aus Pentaerythrit und Epichlorhydrin mit einem Epoxidwert von 0,62 und 42 Teile Isobutanol zugegeben. Bei 75° C läßt man dann nachreagieren bis eine Viskosität von 425 mPa · s (gemessen bei 75° C mit dem ICI-Platte-Konus-Viskosimeter) erreicht ist. Die Reaktion wird schließlich durch Zugabe von 7 Teilen Merkaptoethanol abgebrochen. Der Feststoffgehalt beträgt 69,2 %.

Beispiel F

210 Teile des unter f) hergestellten Tscherniac-Einhorn/Michael-Adduktes, 118 Teile Bisphenol A, 40,7 Teile Paraformaldehyd, 146,1 Teile Di-n-butylamin, 110 Teile Isopropanol und 110 Teile Ethylglykol werden 15 Minuten bei 50° C und anschließend 2,5 Stunden bei 80° C gerührt. Dann erfolgt die Zugabe von 206,8 Teilen des nach b) hergestellten Bindemittels, 285 Teilen eines Diglycidylethers aus Bisphenol A und Epichlorhydrin mit einem Epoxidwert von 0,2, 80 Teilen eines Triglycidylethers aus Pentaerythrit und Epichlorhydrin mit einem Epoxidwert von 0,62, 37 Teilen Isopropanol, 37 Teilen Ethylglykol und 4 Teilen Isobutanol. Bei 70° C läßt man nachreagieren bis eine Viskosität von 510 mPa · s (gemessen bei

75° C mit dem ICI-Platte-Konus-Viskosimeter der Fa. Epprecht) erreicht ist. Die Reaktion wird dann durch Zugabe von 9,7 Teilen Essigsäure abgebrochen. Der Feststoffgehalt beträgt 70 %.

Beispiel G

214,8 Teile des unter g) hergestellten Tscherniac-Einhorn/Michael-Adduktes, 82,5 Teile Bisphenol A, 26,7 Teile Paraformaldehyd, 95,6 Teile Di-n-butylamin, 70 Teile Isopropanol und 30 Teile Isobutanol werden 15 Minuten bei 50° C und anschließend 2,5 Stunden bei 80° C gerührt. Dann erfolgt die Zugabe von 142 Teilen eines Diglycidylethers aus Bisphenol A und Epichlorhydrin mit einem Epoxidwert von 0,1 und 47 Teilen Toluol. Nach weiteren 30 Minuten bei 75 bis 80 °C werden 103 Teile eines Diglycidylethers aus Bisphenol A und Epichlorhydrin mit einem Epoxidwert von 0,2, 52,5 Teile eines Triglycidylethers aus Pentaerythrit und Epichlorhydrin mit einem Epoxidwert von 0,62 und 47 Teile Ethylglykol zugegeben. Bei 70° C läßt man nachreagieren bis eine Viskosität von 400 mPa · s (gemessen bei 75° C mit dem ICI-Platte-Konus-Viskosimeter) erreicht ist. Der Feststoffgehalt beträgt 73,3 %.

Elektrotauchlackierung

Beispiel 1

Zur Herstellung eines 10 %igen Lackbades werden 100 Teile des Festharzes von Beispiel A mit 80 ppm Kupfer (berechnet auf Badvolumen) als wäßrige Kupferacetatlösung gut gemischt, mit 1,8 % Essigsäure (berechnet auf Festharz) protoniert und mit vollentsalztem Wasser auf 1 000 Teile aufgefüllt. Das Lackbad wird 48 Stunden bei 30 °C gerührt ; es hat einen pH-Wert von 6,35 und einen Leitwert von 1 014 $\mu S \cdot cm^{-1}$. Auf phosphatierten Stahlblechen erhält man nach der Abscheidung (2 Minuten bei 230 Volt und 30 °C) und Härtung (20 Minuten bei 180 °C) einen glatten Überzug mit einer Schichtdicke von 15 bis 17 µm.

Die Korrosionsprüfung nach DIN 50021 ergab nach 10 Tagen auf zinkphosphatierten Stahlblechen, die wassernachgespült waren (z. B. Bonder® 125 W der Metallgesellschaft AG), eine Unterwanderung von 1,6 bis 3,6 mm und auf eisenphosphatierten Stahlblechen, die wassernachgespült waren (z. B. Bonder® 1 041 W), eine Unterwanderung von 0,7 bis 1,4 mm.

Beispiel 2

Zur Herstellung eines 10 %igen Lackbades werden 100 Teile des Festharzes von Beispiel B mit 80 ppm Kupfer (berechnet auf Badvolumen) als wäßrige Kupferacetatlösung gut gemischt, mit 2 % Essigsäure (berechnet auf Festharz) protoniert und mit Wasser auf 1 000 Teile aufgefüllt. Das Lackbad wird 48 Stunden bei 30 °C gerührt ; es hat einen pH-Wert von 6,6 und einen Leitwert von 1 074 $\mu S \cdot cm^{-1}$. Nach dem Ausrühren erfolgt die Zugabe von 1,5 Teilen Isodekanol. Auf phosphatierten Stahlblechen erhält man nach der Abscheidung (2 Minuten bei 200 Volt und 30 °C) und Härtung (20 Minuten bei 180 °C) einen glatten Überzug mit einer Schichtdicke von 14 bis 16 µm. Auf nicht vorbehandelten Stahlblechen erhält man nach der Abscheidung (2 Minuten bei 120 Volt und 30 °C) und Härtung (20 Minuten bei 180 °C) einen glatten Überzug mit einer Schichtdicke von 14 bis 15 µm.

Die Korrosionsprüfung nach DIN 50021 ergab nach 10 Tagen auf zinkphosphatierten Stahlblechen die wassernachgespült waren eine Unterwanderung von 1,2 bis 1,8 mm, auf eisenphosphatierten Stahlblechen, die wassernachgespült waren, eine Unterwanderung von 0,4 bis 1 mm und auf nicht vorbehandelten Stahlblechen eine Unterwanderung von 4 bis 6,5 mm (gemessen vom Schnitt).

Beispiel 3

Zur Herstellung eines 10 %igen Lackbades werden 100 Teile des Festharzes von Beispiel C mit 120 ppm Kupfer (berechnet auf Badvolumen) als wäßrige Kuptferacetatlösung gut gemischt, mit 1,7 % Essigsäure (berechnet auf Festharz) protoniert und mit vollentsalztem Wasser auf 1 000 Teile aufgefüllt. Das Lackbad wird 48 Stunden bei 30 °C gerührt ; es hat einen pH-Wert von 6,7 und einen Leitwert von 1 054 $\mu S \cdot cm^{-1}$. Auf phosphatierten Stahlblechen erhält man nach der Abscheidung (2 Minuten bei 220 Volt und 30 °C) und Härtung (20 Minuten bei 180 °C) einen glatten Überzug mit einer Schichtdicke von 15 bis 16 µm.

Die Korrosionsprüfung nach DIN 50021 ergab nach 10 Tagen auf zinkphosphatierten Stahlblechen, die wassernachgespült waren, eine Unterwanderung von 1,7 bis 2,5 mm und auf eisenphosphatierten Stahlblechen, die wassernachgespült waren, eine Unterwanderung von 1,6 bis 4,7 mm (gemessen vom Schnitt).

Beispiel 4

Zur Herstellung eines 10 %igen Lackbades werden 100 Teile des Festharzes von Beispiel D mit 120 ppm Kufper (berechnet auf Badvolumen) als wäßrige Kupferacetatlösung gut gemischt, mit 2,2 %

Essigsäure (berechnet auf Badvolumen) protoniert und mit vollentsalztem Wasser auf 1 000 Teile aufgefüllt. Das Lackbad wird 48 Stunden bei 30 °C gerührt ; es hat einen pH-Wert von 6,1 und einen Leitwert von 1 350 μS. $cm^{-1}$. Nach dem Ausrühren erfolgt die Zugabe von 5 Teilen Isodekanol. Auf phosphatierten Stahlblechen erhält man nach der Abscheidung (2 Minuten bei 130 Volt und 30 °C) und Härtung (20 Minuten bei 180 °C) einen glatten Überzug mit einer Schichtdicke von 14 bis 16 μm.

Die Korrosionsprüfung nach DIN 50021 ergab nach 10 Tagen auf zinkphosphatierten Stahlblechen, die wassernachgespült waren eine Unterwanderung von 1,1 bis 1,7 mm und auf eisenphosphatierten Stahlblechen, die wassernachgespült waren eine Unterwanderung von 0,5 bis 1,4 mm (gemessen vom Schnitt).

Beispiel 5

Zur Herstellung eines 10 %igen Lackbades werden 100 Teile des Festharzes von Beispiel E mit 120 ppm Kupfer (berechnet auf Badvolumen) als wäßrige Kupferacetatlösung gut gemischt, mit 1,8 % Essigsäure (berechnet auf Badvolumen) protoniert und mit vollentsalztem Wasser auf 100 Teile aufgefüllt. Das Lackbad wird 48 Stunden bei 30 °C gerührt ; es hat einen pH-Wert von 6,5 und einen Leitwert von 1 079 μS · $cm^{-1}$. Auf phosphatierten Stahlblechen erhält man nach der Abscheidung (2 Minuten bei 200 Volt und 30 °C) einen glatten Überzug mit einer Schichtdicke von 14 bis 16 μm. Auf nicht vorbehandelten Stahlblechen erhält man nach der Abscheidung (2 Minuten bei 50 Volt und 30 °C) und Härtung (20 Minuten bei 180 °C) einen Überzug mit einer Schichtdicke von 14 bis 16 μm.

Die Korrosionsprüfung nach DIN 50021 ergab nach 10 Tagen auf zinkphosphatierten Stahlblechen, die wassernachgespült waren, eine Unterwanderung von 1 bis 2,5 mm, auf eisenphosphatierten Stahlblechen, die wassernachgespült waren, eine Unterwanderung von 1,2 bis 3 mm und auf nicht vorbehandelten Stahlblechen eine Unterwanderung von 4,8 bis 7 mm (gemessen vom Schnitt).

Beispiel 6

Zur Herstellung eines 10 %igen Lackbades werden 100 Teile des Festharzes von Beispiel F mit 120 ppm Kupfer (berechnet auf Badvolumen) als wäßrige Kupferacetatlösung gut gemischt, mit 1,3 % Essigsäure (berechnet auf Festharz) protoniert und mit vollentsalztem Wasser auf 1 000 Teile aufgefüllt. Das Lackbad wird 48 Stunden bei 30 °C gerührt ; es hat einen pH-Wert von 5,95 und einen Leitwert von 1 200 μS · $cm^{-1}$. Nach dem Ausrühren erfolgt die Zugabe von 5 Teilen Isodekanol. Auf phosphatierten Stahlblechen erhält man nach der Abscheidung (2 Minuten bei 150 Volt und 30 °C) und Härtung (20 Minuten bei 180 °C) einen glatten Überzug mit einer Schichtdicke von 15 bis 16 μm. Auf nicht vorbehandelten Stahlblechen erhält man nach der Abscheidung (2 Minuten bei 100 Volt bei 30 °C) und Härtung (20 Minuten bei 180 °C) einen glatten Überzug mit einer Schichtdicke von 14,5 bis 15,5 μm.

Die Korrosionsprufüng nach DIN 50021 ergab nach 10 Tagen auf zinkphosphatierten Stahlblechen, die wassernachgespült waren, eine Unterwanderung von 1,5 bis 2,8 mm, auf eisenphosphatierten Stahlblechen, die wassernachgespült waren, eine Unterwanderung von 0,3 bis 1,9 mm und auf nicht vorbehandelten Stahlblechen eine Unterwanderung von 8 bis 10 mm (gemessen vom Schnitt).

Beispiel 7

Zur Herstellung eines 10 %igen Lackbades werden 100 Teile des Festharzes von Beispiel G mit 80 ppm Kupfer (berechnet auf Badvolumen) als wäßrige Kupferacetatlösung gut gemischt, mit 1,8 % Essigsäure (berechnet auf Festharz) protoniert und mit vollentsalztem Wasser auf 1 000 Teile aufgefüllt. Das Lackbad wird 48 Stunden bei 30 °C gerührt ; es hat einen pH-Wert von 6,05 und einen Leitwert von 1 050 μS · $cm^{-1}$. Nach dem Ausrühren erfolgt die Zugabe von 7,5 Teilen Isodekanol. Auf phosphatierten Stahlblechen erhält man nach der Abscheidung (2 Minuten bei 230 Volt und 30 °C) und Härtung (20 Minuten bei 180 °C) einen glatten Überzug mit einer Schichtdicke von 9 bis 12 μm.

Die Korrosionsprüfung nach DIN 50021 ergab nach 10 Tagen auf zinkphosphatierten Stahlblechen, die wassernachgespült waren, eine Unterwanderung von 0,5 bis 2 mm und auf eisenphosphatierten Stahlbelchen, die wassernachgspült waren, eine Unterwanderung von 0,2 bis 1,2 mm (gemessen vom Schnitt).

**Patentansprüche**

1. Verfahren zur Herstellung von durch Protonierung mit Säure wasserverdünnbaren, stickstoffbasische Gruppen tragenden Polyadditions/Polykondensationsprodukten, dadurch gekennzeichnet, daß sie hergestellt werden durch Polyaddition von

(A) 5 bis 90 Gew.-% Mannichbasen aus

(a) Mono- und/oder Polyphenolen,

(b) mindestens einem Dialkylamin der Formel

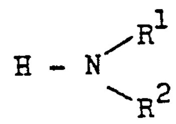

worin $R^1$ und $R^2$ untereinander gleich oder verschieden sind und für einen Alkyl- oder Alkoxyalkylrest mit 1 bis 9 Kohlenstoffatomen stehen oder miteinander zu einem 5- oder 6-gliedrigen Ring verknüpft sind, und

(c) Formaldehyd oder einer Formaldehyd liefernden Verbindung mit

(B) 10 bis 95 Gew.-% mindestens eines Epoxidharzes, wobei die Polyadditions/Polykondensationsprodukte aus (A) und (B) n aromatische Ringe gebundene Gruppen der allgemeinen Formel (I)

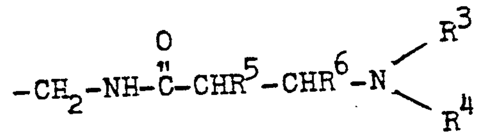 (I)

sowie gegebenenfalls Gruppen der allgemeinen Formel (II)

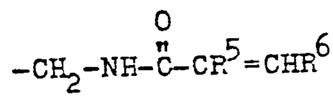 (II)

tragen, worin $R^3$ und $R^4$ untereinander gleich oder verschieden sind und für einen Alkylrest mit 1 bis 9 Kohlenstoffatomen, eine Hydroxyalkyl- oder Alkoxyalkylgruppe mit 2 bis 10 Kohlenstoffatomen stehen oder miteinander zu einem 5- oder 6-gliedrigen Ring verknüpft sind, sowie $R^5$ und $R^6$ untereinander gleich oder verschieden sind und für Wasserstoff oder eine Methylgruppe stehen.

2. Verfahren nach Anspruch 1, dadurch gekennzeichnet, daß die zur Herstellung der Mannichbase (A) verwendete Komponente (b) Di-n-butylamin oder ein Gemisch aus Di-n-butylamine und einem anderen sekundären Amin (b) ist.

3. Verfahren nach Anspruch 1 oder 2, dadurch gekennzeichnet, daß die zur Herstellung der Mannichbase (A) verwendeten Mono- und/oder Polyphenole (a) bestehen aus

($a_1$) mindestens einem ein- oder mehrkernigen Mono- und/oder Polyphenol, das zumindest teilweise durch

($a_2$) ein ein- oder mehrkerniges Mono- und/oder Polyphenol ersetzt ist, das Gruppen der allgemeinen Formel (I)

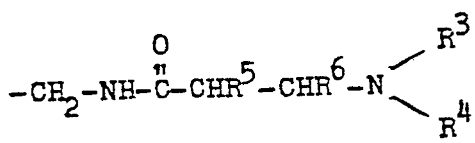 (I)

sowie gegebenenfalls Gruppen der allgemeinen Formel (II)

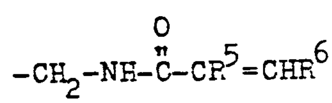 (II)

wobei $R^3$ bis $R^6$ die oben angegebene Bedeutung haben, trägt.

4. Verfahren nach Anspruch 1, 2 oder 3, dadurch gekennzeichnet, daß als Komponente (B) ein Umsetzungsprodukt von Polyepoxidverbindungen mit geringeren als den äquivalenten Mengen an ein- oder mehrkernigen Mono- und/oder Polyphenolen ($a_2$) verwendet wird.

5. Verfahren nach Anspruch 3, dadurch gekennzeichnet, daß die Reste der allgemeinen Formel (I) $R^3$ und $R^4$ Hydroxyethylreste sind.

6. Verwendung der nach einem Verfahren gemäß einem der vorhergehenden Ansprüche hergestellten Polyadditions/Polykondensationsprodukte zur kathodischen Elektrotauchlackierung metallischer Gegenstände.

**Claims**

1. A process for the preparation of a polyadduct/polycondensate which can be diluted with water when protonated with an acid, and contains basic nitrogen groups, by the polyaddition reaction of

(A) from 5 to 90 % by weight of a Mannich base obtained from

(a) monophenols or polyphenols or a mixture of monophenols and polyphenols,

(b) one or more dialkylamines of the formula

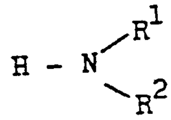

where $R^1$ and $R^2$ are identical or different and are each alkyl or alkoxyalkyl of 1 to 9 carbon atoms, or are linked to one another to form a 5-membered or 6-membered ring, and

(c) formaldehyde or a formaldehyde donor, with

(B) from 10 to 95 % by weight of one or more epoxy resins, the polyadduct/polycondensate of (A) and (B) containing groups, which are bonded to aromatic rings, of the general formula (I)

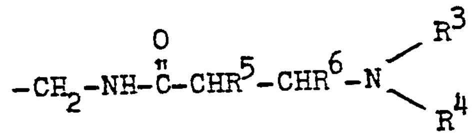

(I)

and optionally containing groups of the general formula (II)

$$-CH_2-NH-\overset{O}{\overset{\|}{C}}-CR^5=CHR^6 \qquad (II)$$

where $R^3$ and $R^4$ are identical or different and are each alkyl of 1 to 9 carbon atoms, or hydroxyalkyl or alkoxyalkyl, each of 2 to 10 carbon atoms, or are linked to one another to form a 5-membered or 6-membered ring, and $R^5$ and $R^6$ are identical or different and are each hydrogen or methyl.

2. A process as claimed in claim 1, wherein the component (b) used to prepare the Mannich base (A) is either di-n-butylamine or a mixture of di-n-butylamine and another secondary amine (b).

3. A process as claimed in claim 1 or 2, wherein the monophenols or polyphenols, or a mixture of monophenols and polyphenols, (a) used to prepare the Mannich base (A) are

($a_1$) one or more mononuclear or polynuclear monophenols or polyphenols, or a mixture of such monophenols and polyphenols, some or all of which are replaced by

($a_2$) a mononuclear or polynuclear monophenol or polyphenol, or a mixture of a monophenol and a polyphenol of this type, which contains groups of the general formula (I)

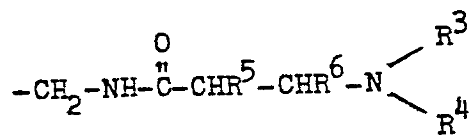

(I)

and optionally contains groups of the general formula (II)

$$-CH_2-NH-\overset{O}{\overset{\|}{C}}-CR^5=CHR^6 \qquad (II)$$

where $R^3$, $R^4$, $R^5$ and $R^6$ have the above meanings.

4. A process as claimed in claim 1, 2 or 3, wherein a reaction product of a polyepoxide compound with less than the equivalent amount of a mononuclear or polynuclear monophenol and/or polyphenol ($a_2$) is used as component (B).

5. A process as claimed in claim 3, wherein the radicals $R^3$ and $R^4$ in the general formula (I) are hydroxyethyl.

6. The use of a polyadduct/polycondensate prepared by a process as claimed in any of the preceding claims for the cathodic electrocoating of metallic articles.

**Revendications**

1. Procédé de préparation de produits de polyaddition/polycondensation portant des groupes azotés

basiques, diluables dans l'eau par protonation avec des acides, caractérisés par le fait qu'ils sont préparés par polyaddition de

(A) 5 à 90 % en poids de bases de Mannich de

(a) mono- et/ou polyphénols

(b) au moins une dialkylamine de formule

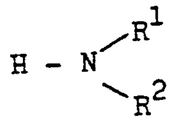

où $R^1$ et $R^2$ sont identiques ou différents et représentent un reste alkyle ou alcoxyalkyle de 1 à 9 atomes de carbone ou sont reliés entre eux pour former un noyau à 5 ou 6 chaînons, et

(c) formaldéhyde ou d'un composé générant du formaldéhyde, avec

(B) 10 à 95 % en poids d'au moins une résine époxyde les produits de polyaddition/polycondensation de (A) et (B) portant des groupes, liés aux noyaux aromatiques, de formule générale (I)

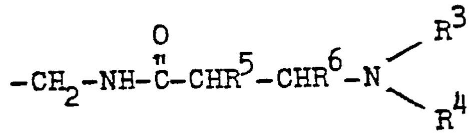 (I)

ainsi que, éventuellement, des groupes de formule générale (II)

$$-CH_2-NH-\overset{O}{\overset{\|}{C}}-CR^5=CHR^6 \qquad (II)$$

où $R^3$ et $R^4$ sont identiques ou différents et représentent un reste alkyle de 1 à 9 atomes de carbone, un groupe hydroxyalkyle ou alcoxyalkyle de 2 à 10 atomes de carbone ou sont reliés entre eux pour former un noyau à 5 ou 6 chaînons, et où $R^5$ et $R^6$ sont identiques ou différents et représentent hydrogène ou un groupe méthyle.

2. Procédé selon la revendication 1, caractérisé par le fait que le composant (b), utilisé pour la préparation de la base de Mannich (A), est di-n-butylamine ou un mélange de di-n-butylamine et d'une autre amine secondaire (b).

3. Procédé selon la revendication 1 ou 2, caractérisé par le fait que les mono- et/ou polyphénols (a), utilisés pour la préparation de la base de Mannich (A) sont constitués par

($a_1$) au moins un mono- et/ou polyphénol à un ou plusieurs noyaux, qui est remplacé, au moins partiellement, par

($a_2$) un mono- et/ou polyphénol à un ou plusieurs noyaux, qui porte des groupes de formule générale (I)

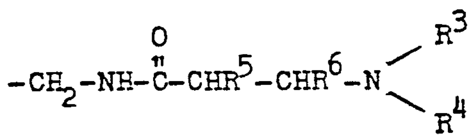 (I)

ainsi qu'éventuellement des groupes de formule générale (II)

$$-CH_2-NH-\overset{O}{\overset{\|}{C}}-CR^5=CHR^6 \qquad (II)$$

$R^3$ à $R^6$ ayant les significations données ci-dessus.

4. Procédé selon la revendication 1, 2 ou 3, caractérisé par le fait que, comme composant (B), est utilisé un produit de réaction de composés polyépoxydes avec une quantité inférieure à la quantité équivalente de mono- et/ou polyphénols ($a_2$) à un ou plusieurs noyaux.

5. Procédé selon la revendication 3, caractérisé par le fait que les restes $R^3$ et $R^4$ de la formule générale (I) sont des restes hydroxyéthyle.

6. Utilisation des produits de polyaddition/polycondensation préparés par un procédé selon l'une des revendications précédentes pour la peinture par électrodéposition cathodique d'objets métalliques.